# EUROPÄISCHE PATENTSCHRIFT

(11) **EP 1 297 740 B1**
(45) Veröffentlichungstag und Bekanntmachung des Hinweises auf die Patenterteilung: **13.12.2006**
(21) Anmeldenummer: 02021796.4
(22) Anmeldetag: 26.09.2002
(51) Int. Cl.: A01G 23/04

(54) **Baum- und Strauchquartier**
Housing for tree or shrub
Caisson pour arbre ou buisson

(30) Priorität: 26.09.2001 DE 10147320
(43) Veröffentlichungstag der Anmeldung: 02.04.2003
(73) Patentinhaber: Edelmann, Jörg, 88316 Isny (DE)
(72) Erfinder: Edelmann, Jörg, 88316 Isny (DE)
(74) Vertreter: Popp, Eugen

(56) Entgegenhaltungen:
- DE-A- 2 407 496
- DE-A- 3 731 975
- FR-A- 2 599 215
- GB-A- 2 322 782

## Beschreibung

Die vorliegende Erfindung betrifft ein Baum- und Strauchquartier gemäß dem Oberbegriff des Anspruches 1.

Die bekannten Baum- und Strauchquartiere umfassen in der Regel einen in Draufsicht runden oder quadratischen Pflanzkorb aus Beton, der meist als einstückiges Bauteil in einer dafür vorgesehenen Bodengrube plaziert wird. Als besonders vorteilhaft werden glockenartige Pflanzkörbe dargestellt, d.h. Pflanzkörbe, die nach oben hin konisch verjüngt sind. Die Abdeckung dieser Pflanzkörbe erfolgt meist durch Gitterroste aus Gußeisen. Diese Gitterroste werden in der Fachwelt auch "Baumscheiben" genannt. Nach unten hin sind die erwähnten Pflanzkörbe offen, so daß das Wurzelwerk sich ungehindert unten in das Erdreich ausdehnen kann. Bei etwas tiefer ausgebildeten Pflanzkörben weisen die Seitenwände derselben Öffnungen für den Durchtritt von Wurzeln auf. Die Öffnungen bekannter Pflanzkörbe sind meist relativ klein bzw. schmal mit der Folge, daß die Wurzel innerhalb des Baum- oder Strauchquartiers nur solange agieren kann, bis sie die Größe der Durchtrittsöffnung in der Seitenwand des Pflanzkorbes erreicht hat. Danach wird das Wurzelwerk regelrecht abgewürgt, worunter die Bäume oder Sträucher nicht unerheblich leiden bis hin zum Absterben. Man beobachtet nach einiger Zeit das sogenannte Blumentopf-Syndrom. Dabei ist zu bedenken, daß die Öffnung der Pflanzkörbe nach unten meist nicht ausreicht, um die Bäume am Leben zu erhalten. So hat zum Beispiel eine Studie von zehn Alleebäumen in sieben Großstädten ergeben, daß die Wurzeln kaum tiefer als 1,5 m reichen. Ausgeprägtes Wurzelwachstum wurde dagegen entlang von Randsteinen und Kanalgräben beobachtet, d.h. in horizontaler Richtung. Man erkennt dies an geteerten Straßen sehr häufig durch Aufwürfe des Teerbelages. Die bekannten Baum- und Strauchquartiere sind in der Regel für diese Art der Durchwurzelung nicht ausgelegt. Darüber hinaus wird die Wurzelbildung sehr häufig durch Einbauten behindert, die sich in den Wurzelraum der bekannten Baum- und Strauchquartiere hineinerstrecken, wie zum Beispiel Baumschutzbügel, Pfosten für Verkehrszeichen, Träger für Wurzelbrücken, Ausstattungsgegenstände für eine sog. Stadtmöblierung, etc.

Auch sind bei den bekannten Pflanzkörben keine gesonderten Maßnahmen für einen einfachen Einbau von Bewässerungseinrichtungen vorgesehen.

Aus der DE 36 09 970 Cl ist es bekannt, Baum- und Strauchquartiere zum einen mehrteilig auszubilden, und zum anderen die Öffnungen in der Seitenwand mit einem Verschlußelement aus verrottbarem oder durchwurzelbarem Material, insbesondere netzförmigem Gewebe zu verschließen. Damit soll es möglich sein, den

Außenraum des Quartiers unabhängig von dessen Innenraum mit Erdreich zu füllen, wobei der Innenraum zur Aufnahme hochwertiger Pflanzerde dient, während der Außenraum mit minderwertigem Bodenmaterial gefüllt wird. Gleichzeitig soll jedoch die Trennung zwischen Außen- und Innenraum nur temporär sein und den Durchtritt von Wurzeln aus dem Innenraum in den Außenraum nicht behindern.

Der vorliegenden Erfindung liegt die Aufgabe zugrunde, unter Beibehaltung der vorgenannten Vorteile ein Baum- und Strauchquartier zu schaffen, welches einfach montierbar oder demontierbar ist und die Fixierung von Übereck-Verbindungselementen, insbesondere Verbindungswinkeln, Baumschutzgittern oder -bügeln, Pfosten für Verkehrsschilder, Anker- bzw. Spannseilen zur Niederhaltung von Wurzelwerk, Auflagewinkel für Abdeckelemente aus Gußeisen, Beton, Holz oder dgl., und/oder die Befestigung von sich über dem Wurzelraum erstreckenden Tragelementen, z.B. in Form von I-Trägern oder dgl., auf denen sogenannte "Wurzelbrücken" verlegbar sind, erlauben.

Diese Aufgabe wird erfindungsgemäß durch die kennzeichnenden Merkmale des Anspruches 1 gelöst.

Ein wesentlicher Kern der vorliegenden Erfindung liegt also darin, daß an den Teilwänden oder Teilwandelementen des Baum- und Strauchquartiers innenseitig sich etwa horizontal erstreckende U- oder C-Profilschienen bzw. -Schienenabschnitte eingefügt, insbesondere einbetoniert sind. Die Einfügung der vorgenannten Schienen, auch Halfenschienen genannt, erfolgt so, daß die. Profile nach innen hin, d.h. zum Innenraum des Baum- oder Strauchquartiers offen sind. Diese Profilschienen eigenen sich und dienen zur Fixierung von Übereck-Verbindungselementen, Baumschutzgittern, Wurzelbrücken etc. Dementsprechend sind die erfindungsgemäß ausgebildeten Baum- und Strauchquartiere hinsichtlich ihrer Montage oder Demontage sowie auch hinsichtlich der Anbringung von zusätzlichen Einrichtungen äußerst flexibel.

Die Plazierung des erfindungsgemäßen Baum- und Strauchquartiers erfolgt wie folgt:
1) Ausheben einer Bodengrube und Herstellen eines Auflagers vorzugsweise aus offenporigem Schottergestein;
2) Lose Aufstellung des Pflanzkorbes, der vorzugsweise mehrteilig ausgebildet ist;
3) Hinterfüllung des Pflanzkorbes mit Erdreich, Kies und/oder Sand;
4) Einsetzen eines Bewässerungssystems, falls dies geplant ist;
5) Befüllung des durch den Pflanzkorb begrenzten Wurzelraums mit Humus;
6) Pflanzung eines Baums oder Strauches;
7) ggf. Auflegen und Ausrichten eines Aufsatzrahmens für eine Baumscheibe od. dgl. nach dem Umfeld;
8) Abdeckung des Pflanzkorbes mit einer sog. Baumscheibe aus Grauguß oder Beton;
9) Anschließen des Umfeldes.

Die Maßnahmen 4), 5) und 6) können zeitlich auch versetzt ausgeführt werden.

Vorzugsweise erstreckt sich die dem Pflanzkorb definierende Seitenwand im im Erdreich versenkten Zustand im wesentlichen vertikal, so daß Pflanzungen ohne weiteres ausgetauscht werden können.

Zum Zwecke einer erleichterten Herstellung, eines erleichterten Transportes und auch einer erleichterten Errichtung vor Ort besteht der Pflanzkorb vorzugsweise aus wenigstens zwei jeweils vorgefertigten, übereinander angeordneten Ring- od. dgl. Elementen. Besonders vorteilhaft ist es, wenn zu diesem Zweck die Seitenwand des Pflanzkorbes aus mehreren, insbesondere wenigstens drei über Eck miteinander verbundenen und ggf. auch übereinander angeordneten Teilwänden bzw. Teilwandelementen besteht, die an den Ecken vor Ort starr miteinander verbunden werden. Auf diese Art und Weise können drei- und mehreckige Pflanzkörbe erstellt werden. Diese können symmetrisch oder asymmetrisch ausgebildet sein je nach den äußeren Umständen. Grundsätzlich ist es auch denkbar, Ringelemente zu verwenden, wobei sich diese in der Regel nur dann anbieten, wenn die Durchmesser nicht allzu groß sind.

In jedem Fall ist es noch vorteilhaft, wenn der Pflanzkorb eine radial nach außen und/oder innen verbreiterte Standfläche ggf. mit Ausnehmungen aufweist, die eine bessere Lastverteilung und ggf. auch Verzahnung im bzw. mit dem Untergrund beim Überfahren des Quartiers mit schweren Lastkraftwagen etc. gewährleistet. Dadurch wird eine sog. "Einstanzung" des Quartiers im Boden verhindert, insbesondere dann, wenn der Untergrund relativ weich bzw. locker ist. Beim Stand der Technik kann hier Abhilfe nur durch entsprechende Erdverdichtung geschaffen werden, die wiederum einer guten Durchwurzelung entgegensteht.

Eingangs wurde auch erwähnt, daß die erfindungsgemäßen Baum- und Strauchquartiere die Möglichkeit bieten, in einfacher Weise eine gute Bewässerung des Wurzelraumes bewerkstelligen zu können. Zu diesem Zweck weist zumindest ein Teil der Seitenwand des Pflanzkorbes längs des oberen Innenrandes eine vorzugsweise durchgehende Ausnehmung zur Aufnahme eines wasserdurchlässigen, insbesondere offenporigen Einsatzes aus PVC od. dgl. Material auf, wobei die innenrandseitige Ausnehmung über wenigstens eine nach oben, d.h. zur Erdoberfläche bzw. Geh- und Fahrfläche hin offenen Bewässerungsschacht mit der Geh- und Fahrfläche in Verbindung steht. Damit wird eine Fluidverbindung zwischen der Oberfläche und dem Wurzelraum des Quartiers geschaffen. Alternativ zu der vorgenannten Lösung ist es auch denkbar, in die innenrandseitige Ausnehmung ein wasserdurchlässiges Formteil mit sich in den Wurzelraum hineinerstreckender Sickerleitung einzufügen, wobei die Sickerleitung zum Beispiel durch einen perforierten Rohr- oder Schlauchabschnitt gebildet sein kann. Vorzugsweise wird zu diesem Zweck ein perforiertes PVC-, PE- oder auch Ziegelrohr verwendet.

Der wasserdurchlässige Einsatz kann als Mehrkammereinsatz mit wenigstens zwei, insbesondere drei übereinander angeordneten Kammern unterschiedlicher Wasseraufnahmekapazität ausgebildet sein, wobei die unterste Kammer, bei drei Kammern die beiden unteren Kammern ggf. mit einer sich in den Wurzelraum hineinerstreckenden Sickerleitung verbunden sind, während die oberste oder ggf. die beiden oberen Kammer(n) unmittelbar zum Wurzelraum hin geöffnet ist bzw. sind. Damit ist sichergestellt, daß bei extrem starker Bewässerung überschüssiges Wasser direkt in den Wurzelraum dringt, während weiteres Wasser nur über die Sickerleitung in den Wurzelraum eingeleitet wird, was den Vorteil einer länger dauernden Bewässerung hat.

Schließlich zeichnet sich eine weitere Ausführungsform dadurch aus, daß am oberen Rand des Pflanzkorbes eine höhenverstellbare Abstützung für einen gesonderten Rahmen zur Aufnahme eines Bodenabdeckelements, insbesondere Bodenscheibe in Form eines Gitterrostes oder Betondeckels vorgesehen ist. Damit können in einfacher Weise Anpassungen an die Umgebungsfläche vorgenommen werden. Der entsprechende Stützrahmen weist vorzugsweise eine Bewässerungsöffnung auf, die mit dem erwähnten Bewässerungsschacht in Verbindung steht.

Die oben erwähnte Ausnehmung in der Seitenwand für die Aufnahme eines wasserdurchlässigen Einsatzes oder Formteils kann nach außen hin noch durch ein Lochblech oder Geotextil abgedeckt sein, um das Einbringen von Schmutz in den wasserdurchlässigen Einsatz oder das wasserdurchlässige Formteil Sickerleitung zu vermeiden.

Im übrigen ist es denkbar, die beschriebene Bewässerungseinheit für jedes Baum- und Strauchquartier gesondert auszubilden oder mehrere Bewässerungseinheiten für eine Gruppe von Quartieren zusammenzulegen. Dann müssen natürlich die fraglichen Bewässerungseinheiten über horizontale Wasserleitungen, die unterhalb der Bodenfläche verlegt sind, miteinander verbunden werden.

Nachstehend werden bevorzugte Ausführungsformen und Details eines erfindungsgemäßen Baum- und Strauchquartiers anhand der beigefügten Zeichnungen näher erläutert. Es zeigen:
- Figur 1: einen Längsschnitt durch eine erste Ausführungsform eines Baum- und Strauchquartiers gemäß Erfindung;
- Figur 2: eine Teil-Innenansicht eines gegenüber Figur 1 etwas abgewandelten Baumquartiers in verkleinertem Maßstab;
- Figur 3: einen Schnitt durch das Baumquartier gemäß Figur 2 Längslinie III-III;
- Figur 3a: einen Querschnitt entsprechend dem Querschnitt gemäß Figur 3 in vergrößertem Maßstab
- Figur 4: ein Detail eines Baumquartiers mit einer Variante einer Bewässerungseinheit teilweise im Schnitt, teilweise in Seitenansicht;
- Figur 5: Teil einer weiter abgewandelten Ausführungsform eines Baumquartiers im Längsschnitt;
- Figur 6: ein Detail eines Baumquartiers gemäß den vorstehenden Figuren unter Darstellung des Anschlusses eines Verbindungswinkels, teilweise im Schnitt, teilweise in Ansicht;
- Figur 7: die Darstellung der Anbringung eines Verkehrsschildes an der Innenseite des erfindungsgemäßen Baumquartiers;
- Figur 8a und 8b: die Darstellung der Fixierung einer Betonbaumscheibe oder einer Baumscheibe aus Grauguß bei einem Quartier gemäß den vorstehenden Ausführungen;
- Figur 9a, 9b: eine schematische Darstellung eines Baumquartiers gemäß der Erfindung-mit Spannbändern für Wurzel und Baumstamm;
- Figur 10: eine schematische Darstellung eines Baumquartiers gemäß der Erfindung mit Baumschutzbügel;
- Figur 11: ein weiteres Detail eines Baumquartiers nach den vorstehenden Zeichnungen unter Darstellung des Anschlusses einer Ösenmutter an der Innenseite des Baumquartiers teilweise im Querschnitt, teilweise in Ansicht;
- Figur 12: ein erfindungsgemäß ausgebildetes Baumquartier mit Quertraversen zur Ausbildung einer Wurzelbrücke teilweise im Querschnitt längs Linie XII-XII in Fig. 13a, teilweise in Ansicht;
- Figur 13a-13f: verschiedene Ausführungsformen von Baumquartieren in Draufsicht;
- Figur 14: eine weitere Ausführungsform eines Baumquartiers in Draufsicht unter Darstellung eines Stützrahmens für eine Abdeckung;
- Figur 15: das Baumquartier gemäß Figur 14 im Längsschnitt längs Linie XV-XV in Fig. 14;
- Figur 16: ein weiteres Detail eines Baumquartiers nach den vorstehenden Abbildungen unter Darstellung einer höhenverstellbaren Auflage für eine Baumscheibe im Längsschnitt;
- Figur 17: eine weitere Ausführungsform eine erfindungsgemäßen Baum- und Strauchquartiers im Längsschnitt längs Linie XVII-XVII in Fig. 13d unter Darstellung einer Mehrkammer-Bewässerungseinheit;
- Figur 18: eine Teilansicht entsprechend Figur 17 in vergrößertem Maßstab; und
- Figur 19: ein Detail eines Baumquartiers gemäß den vorstehenden Ausführungen unter Darstellung der Befestigung eines Aufnahmerohres für den Pfosten eines Verkehrsschildes od. dgl. an der Innenseite des Baumquartiers im Schnitt.

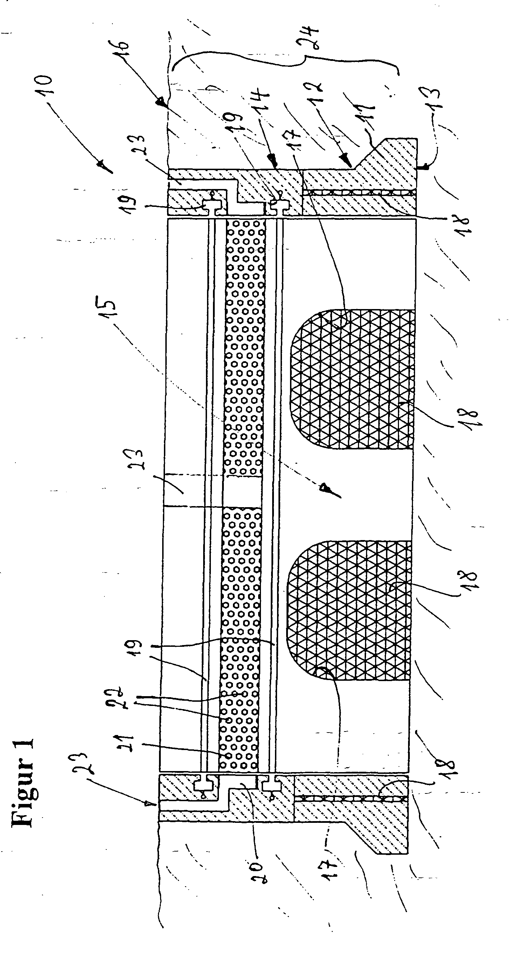

Die Figur 1 zeigt eine Ausführungsform eines erfindungsgemäßen Baum- oder Strauchquartiers 10 im schematischen Längsschnitt. Dieses Strauchquartier 10 besteht aus einem hinsichtlich seiner Standfläche radial nach außen verbreiterten (Verbreiterung 11) Bodenelement 12, welches einstückig in Form eines Rings oder Rechteckrahmens ausgebildet sein kann. Es ist jedoch auch eine mehrteilige Ausführungsform denkbar, wobei dann die einzelnen Teilelemente in einer noch weiter unten näher beschriebenen Weise miteinander verbunden werden. Die radial nach außen verbreiterte Standfläche des Bodenelements 12 ist in Figur 1 mit der Bezugsziffer 13 gekennzeichnet. Damit eignet sich das dargestellte Baum-/Strauchquartier insbesondere auch zur Verlegung auf weichem oder lockerem, insbesondere auch sandigem Untergrund. Auf das Bodenelement 12 sind aufrechte Seitenwandelemente 14 aufgesetzt, die jeweils aus Teilelementen bestehen und zu einer starren Umfangswand in Ring- oder Rechteckform zusammengesetzt sind. Die Seitenwandelemente 14 bilden mit dem Bodenelement 12 einen Wurzelraum 15 seitlich begrenzendem Pflanzkorb, der in eine vorher ausgehobene Bodengrube eingesetzt ist, und zwar so, daß die Oberkante des Pflanzkorbes bzw. des durch diesen definierten Baum-/Strauchquartiers etwa bündig mit der Erdoberfläche bzw. Geh- oder Fahrfläche 16 abschließt. Das Bodenelement 12 kann mit den Seitenwandelementen 14 auch einstükkig ausgebildet sein.

Innenseitig erstreckt sich die Seitenwand des Pflanzkorbes durchgehend vertikal, d.h. die obere Öffnung des aus den Elementen 12 und 14 zusammengesetzten Pflanzkorbes ist nicht - gegenüber der lichten Weite des Pflanzkorbes im Bereich des Wurzelraumes - verengt.

Die durch das Bodenelement und die Seitenwandelemente 14 definierte seitliche Begrenzung des Pflanzkorbes weist Wurzeldurchtrittsöffnungen 17 auf, die derart groß bemessen sind, daß auch bei ausgewachsenem Baum oder Strauch ein zwängungsfreier Durchtritt wenigstens eines Wurzelstrangs - erfahrungsgemäß größten Wurzelstrangs - gewährleistet ist, wobei sich über die Wurzeldurchtrittsöffnungen 17 jeweils eine netzartige Abdeckung 18 erstreckt. Diese netzartige Abdeckung wird vorzugsweise durch unverzinktes Streckmetall mit einer Dicke von 1,2 bis 2,0 mm gebildet. Dadurch wird eine Durchwurzelung durch die Durchtrittsöffnungen 17 hindurch nicht behindert; andererseits wird jedoch ein Auswandern von Pflanzerde bzw. Humus aus dem Wurzelraum 15 behindert. Gleiches gilt für das Einwandern von äußerem Erdreich bzw. Kies in den Wurzelraum 15 hinein. Die netzartige Abdeckung 18 schafft also trotz der extrem großen Wurzeldurchtrittsöffnungen 17 eine ausreichende Separation zwischen Wurzelraum 15 einerseits und äußerem Erdreich andererseits.

Innenseitig sind an den Seitenwandelementen 14 C-Profilschienen 19 eingefügt, und zwar mit der Innenseite der Seitenwandelemen te 14 bündig abschließend. Derartige Profilschienen werden auch als "Halfenschienen" bezeichnet.

Da das Bodenelement ebenso wie die Seitenwandelemente vorzugsweise aus Beton bestehen, werden die erwähnten Halfenschienen in diesen einbetoniert, und zwar so, daß das Profil nach innen hin, d.h. im montierten Zustand zum Wurzelraum 15 hin offen ist. In diese Profilschienen können sog. Hakenkopf-, Hammerkopf- oder Halfenschrauben mit Verzahnungsrillen eingefügt werden,- wobei zu diesem Zweck der Schraubenkopf innerhalb des Profils so plaziert wird, daß der Schraubenhals durch die Profilöffnung hindurch nach außen vorsteht. Die erwähnten Befestigungsschrauben lassen sich dann innerhalb der Profilschienen beliebig positionieren, zum Beispiel im Eckbereich zur Befestigung von Verbindungswinkeln für zwei über Eck aneinanderstoßende Seitenwandelemente 14. Auf diese Weise können die Seitenwandelemente 14 starr miteinander verbunden werden, und zwar entweder über Eck oder auch durchgehend in Längsrichtung zur Ausbildung des entsprechend verlängerten Seitenwandelements.

Die in Figur 1 dargestellten Seitenwandelemente 14 weisen innenseitig auf etwa halber Höhe eine durchgehende Ausnehmung 20 nach Art einer Rechtecknut zur Aufnahme eines wasserdurchlässigen, insbesondere offenporigen Einsatzes aus Kunststoff oder einem Kunststoff-Splitt-Gemisch auf, der innenseitig mit der Innenfläche der Seitenwandelemente 14 bündig abschließt. Der entsprechende wasserdurchlässige Einsatz ist in Figur 1 mit der Bezugsziffer 21 gekennzeichnet. Die erwähnten Poren für die Wasserdurchlässigkeit sind in Figur 1 mit der Bezugsziffer 22 gekennzeichnet. Die Ausnehmung 20 ist über mehrere sich nach oben zur Erdoberfläche bzw. Geh- und Fahrfläche 16 hin offene Bewässerungsschächte 23 mit der Geh- und Fahrfläche verbunden. Über diese Bewässerungsschächte 23 dringt Oberflächenwasser oder speziell angeschlossenes Gießwasser in den Aufnahmeraum 20 bzw. in den wasserdurchlässigen Einsatz 21, und über diesen wiederum in den Wurzelraum 15 zur Bewässerung des sich darin befindlichen Wurzelwerkes eines Baumes oder Strauches. Durch den wasserdurchlässigen Einsatz 21 erfolgt über den Umfang des Pflanzkorbes bzw. Quartiers eine etwa gleichmäßige Wasserverteilung, so daß das Wurzelwerk entsprechend gleichmäßig bewässert werden kann. Der wasserdurchlässige Einsatz hat auch zur Folge, daß das Wasser relativ dosiert in den Wurzelraum 15 gelangt, so daß über einen etwas längeren Zeitraum eine dosierte Bewässerung erreicht werden kann.

Die obere Öffnung des beschriebenen Quartiers 10 bzw. durch die Elemente 12 und 14 definierten Pflanzkorbes 24 wird durch eine sogenannte Baumscheibe abgedeckt, die hier nicht näher dargestellt ist. Diese Baumscheibe kann aus Grauguß oder vorzugsweise ebenfalls Beton bestehen. Sie kann nach Art eines geschlossenen Deckels oder auch nach Art eines wasserdurchlässigen Gitters ausgebildet sein. Auf jeden Fall weist die Baumscheibe eine zentrale Öffnung für den Durchtritt eines Baumstamms oder den Durchtritt von entsprechend großen Strauchstämmen auf. Vorzugsweise besteht die Baumscheibe aus mehreren Einzelsegmenten, die dann nach Bepflanzung und Befüllung des Wurzelraums 15 auf der Befüllung entsprechend verlegt werden. Vorzugsweise werden die Baumscheibe bzw. die entsprechenden Bauelemente auf einem gesonderten Stützrahmen verlegt, der längs des oberen Öffnungsrandes des Pflanzkorbes 24 ausgebildet ist.

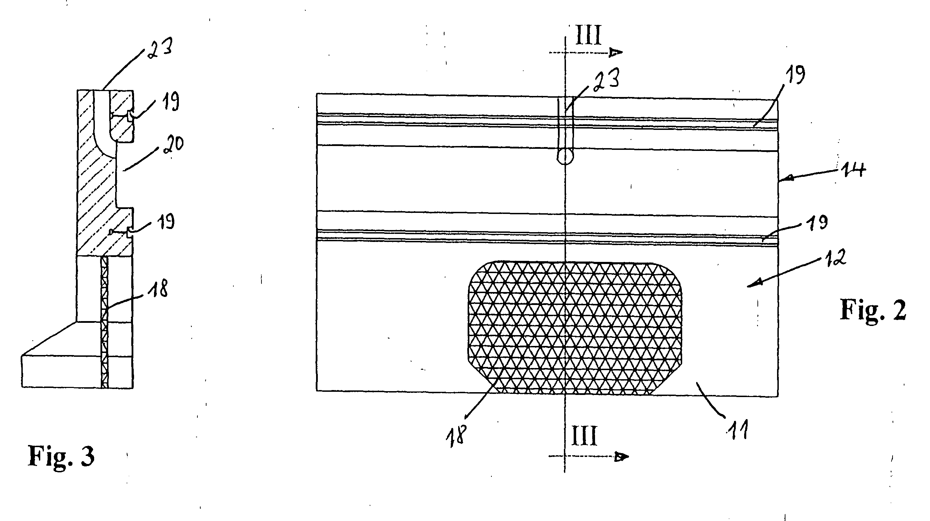

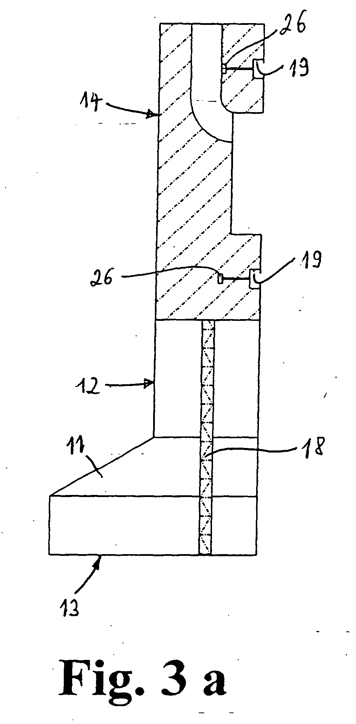

Die Figur 2 zeigt das Quartier gemäß Figur 1 bzw. einen Teil desselben in ähnlicher Innenansicht wie Figur 1, wobei Figur 3 einen Schnitt Längslinie III-III in Figur 2 zeigt.

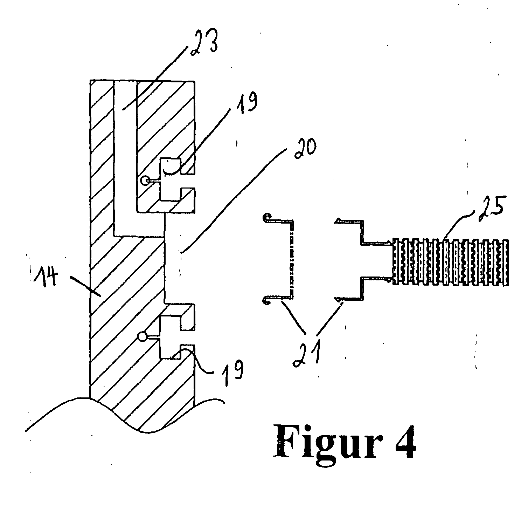

In Figur 4 ist ein Teil eines Seitenwandelements 14 mit integrierten Halfenschienen 19, Bewässerungsschacht 23 und Ausnehmung 20 für einen Bewässerungseinsatz dargestellt, wobei der Bewässerungseinsatz 21 ein U-Profil ist, dessen Schenkel in die Ausnehmung 20, die in Form einer Rechtecknut ausgebildet ist, einsteckbar sind, und zwar so, daß sie innerhalb der Ausnehmung 20 entweder verrasten oder zumindest klemmend gehalten werden. Der Steg zwischen den beiden Schenkeln der beschriebenen Bewässerungseinheit 21 ist perforiert und schließt im montierten Zustand etwa bündig mit der Innenseite der Seitenwandelemente 14 ab. An vorbestimmten Stellen sind sog. Sickerleitungen 25 angeschlossen, die sich etwa radial in den Wurzelraum 15 hineinerstrecken und somit eine Bewässerung auch in die Tiefe des Wurzelraumes 15 erlauben.

Die in Figur 4 dargestellte Bewässerungseinheit 21 besteht vorzugsweise aus Kunststoff. Sie kann jedoch ebenso aus Edelstahl hergestellt sein. Die Sickerleitung selbst ist in Form eines perforierten Schlauches oder Rohres ausgebildet.

Die Ausnehmung 20 hat zum Beispiel eine Höhe von etwa 150 bis 200 mm. Die Sickerleitung besitzt dann einen Durchmesser von etwa 50 bis 100 mm.

Zu der verbreiterten Standfläche 13 sei noch erwähnt, daß diese wenigstens etwa 0,15 m² pro laufendem Meter aufweist.

Die Figur 4 entspricht der Figur 3, wobei sie noch etwas deutlicher die an der Rückseite der Profilschienen 19 angeordneten Bolzenanker 26 erkennen läßt, die eine dauerhaft feste Verankerung der Profilschienen bzw. Halfenschienen 19 im Beton gewährleisten.

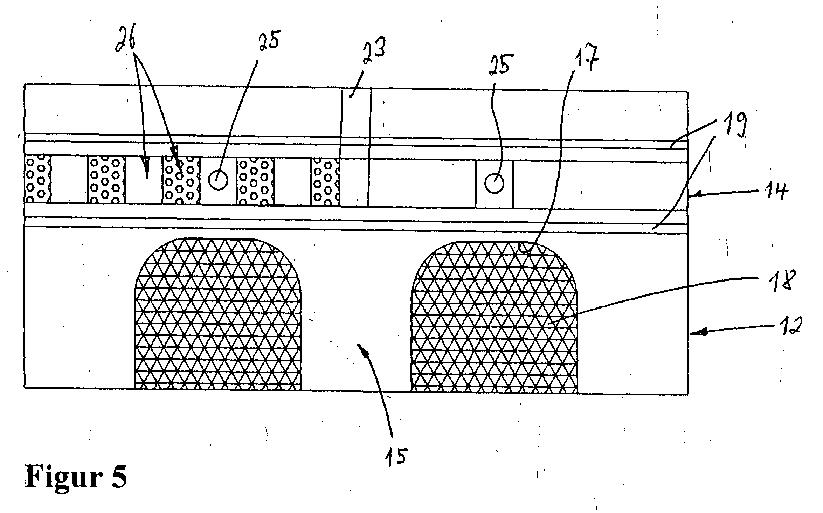

Die Ausführungsform nach Figur 5 unterscheidet sich von derjenigen nach Figur 1 nur dadurch, daß der Bewässerungseinsatz 21 nur teilweise zum Wurzelraum 15 hin perforiert ist. Zwischen den perforierten Abschnitten, aber auch im Bereich geschlossener Abschnitte kann ein Einsatz zum Anschluß einer Sickerleitung 25 eingefügt sein.

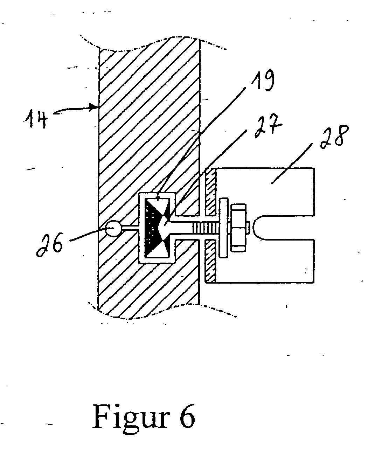

Figur 6 zeigt die Anordnung einer sog. Halfenschraube 27 innerhalb der Profilschiene bzw. Halfenschiene 19 zur Befestigung eines Verbindungswinkels 28, der im vorliegenden Fall als Übereckverbindung dient.

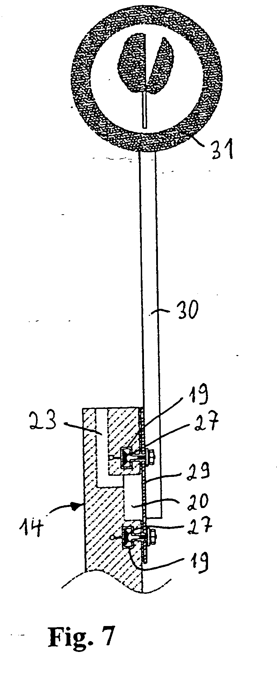

In Figur 7 ist die Befestigung einer Halteplatte 29 an der Innenseite der Seitenwand 14 mittels der Halfenschrauben 27 dargestellt, wobei die Halteplatte 29 als Träger für den Pfosten 30 eines Verkehrsschildes 31 dient. Die Profil- bzw. Halfenschienen 19 samt zugehöriger Schrauben 27 eignen sich also in besonders guter Weise für die Befestigung von Einbauteilen an der Innenseite des Pflanzkorbes 24, ohne daß das Volumen des Wurzelraumes darunter leidet.

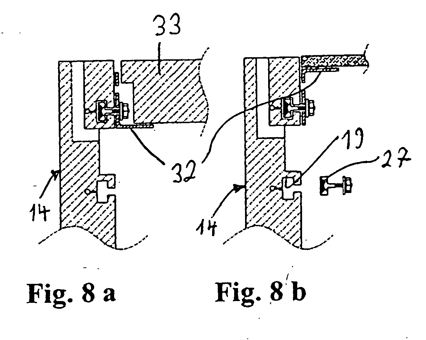

Dies lassen auch die Figuren 8a und 8b erkennen, die die Befestigung eines um 180° wendbaren Auflagewinkels 32 für eine Betonbaumscheibe 33 oder Baumscheibe 34-aus Grauguß od. dgl. dient.

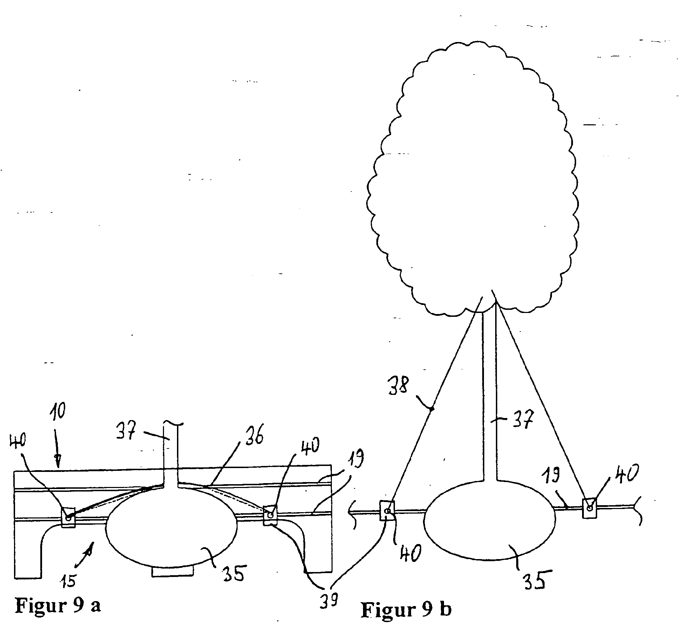

In den Figuren 9a, 9b ist die Befestigung von entweder über das Wurzelwerk 35 innerhalb des Wurzelraumes 15 eines erfindungsgemäßen Quartiers 10 gespannten Spannbändern 36 (Figur 9a) oder unmittelbar am Stamm 37 eines Baumes befestigten Spannseilen 38 an den Profil- bzw. Halfenschienen 19 schematisch dargestellt. Die Spannbänder bzw. Spannseile 36, 38 sind zu diesem Zweck an Ankerplatten 39 mit Ösenmuttern 40 befestigt, die zur entsprechenden Spannung der Spannbänder 36 bzw. Spannseile 38 innerhalb der Profilschiene 19 soweit nach außen geschoben werden, daß die gewünschte Spannung erhalten wird.

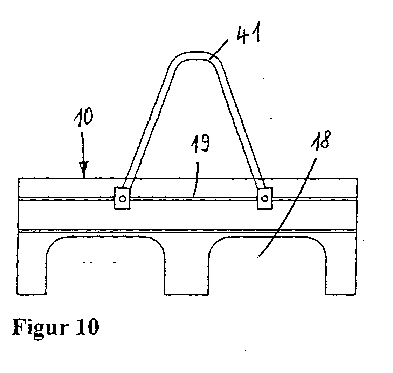

In gleicher Weise können auch sogenannte Baumschutbügel 41 an den Profil- bzw. Halfenschienen 19 befestigt werden, wie Figur 10 erkennen läßt.

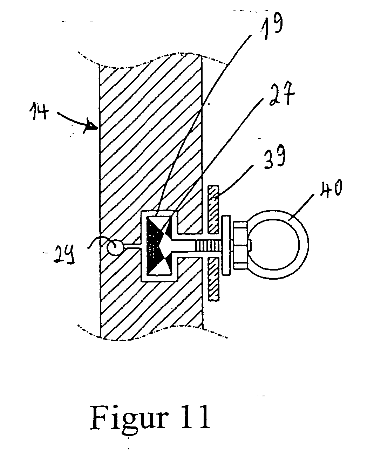

In Figur 11 ist die Befestigung einer Ankerplatte 39 mit Ösenmutter 40 an einer Profil- bzw. Halfenschiene 19 mittels Halfenschraube 27 im Detail dargestellt. An der Ösenmutter 40 werden also die anhand der Figuren 9a und 9b erwähnten Spannbänder 36 bzw. Spannseile 38 befestigt.

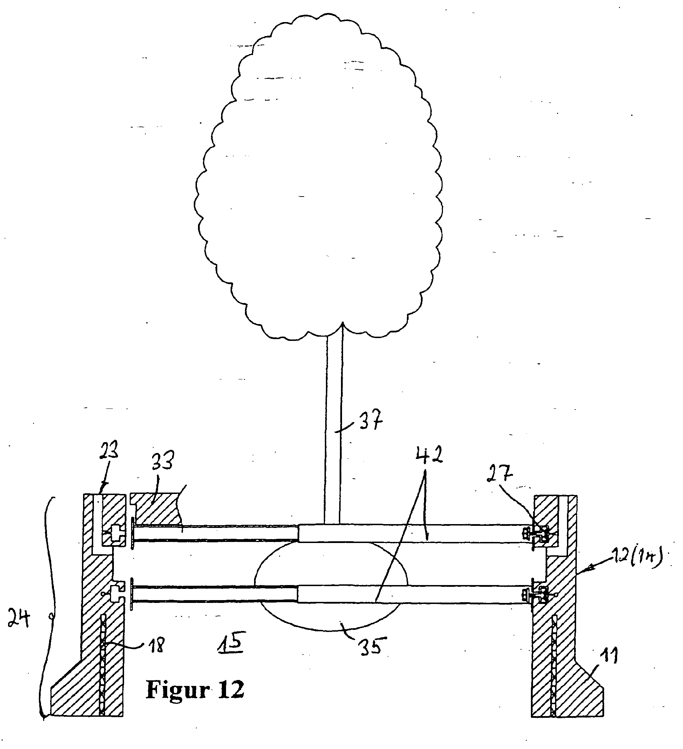

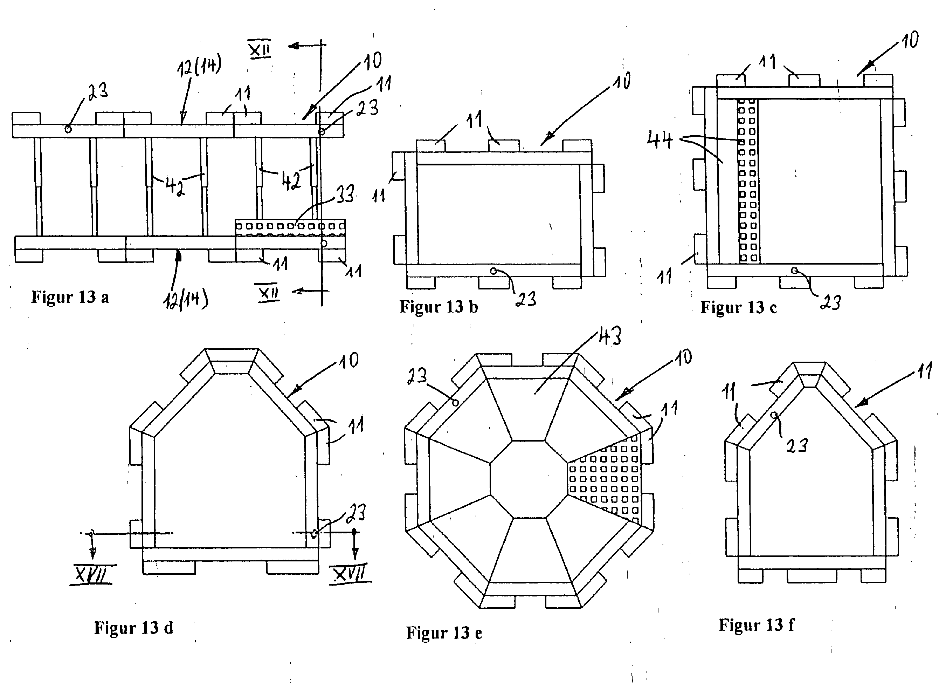

In Figur 12 ist die Befestigung von Querträgern 42 als Unterbau für sogenannte Wurzelbrücken an den Halfenschienen 19 mittels der Halfenschrauben 27 schematisch dargestellt. Die Querträger 42 erstrecken sich also quer über den Pflanzkorb 24, und zwar oberhalb und seitlich des Wurzelwerks 35. Über die oberen Querträger 42 läßt sich, wie in Figur 12, aber auch Figur 13a angedeutet, zum Beispiel eine Betonbaumscheibe 33 verlegen. Der Pflanzkorb 24 ist im vorliegenden Fall kein Umfangskörper, sondern umfaßt nur zwei sich etwa parallel zueinander erstreckende Seitenwände 12 (14), die hier einstückig ausgebildet sind.

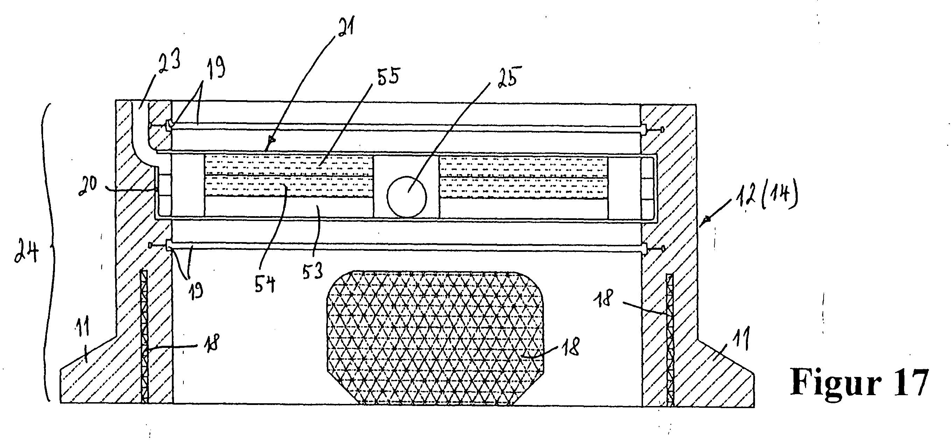

Die Figuren 13a-13f zeigen mögliche Baumquartierformen jeweils aus sieben Grundelementen zusammengestellt und abgestimmt auf Parkplatzflächen von 2,30 bis 2,50 m. Die Baumscheiben können zum Teil perforiert ausgebildet sein, wie Figuren 13a, 13c und 13e erkennen lassen. Der Umriß der Quartiere 10 kann also sehr unterschiedlich sein, entweder langgestreckt (Figur 13a), rechteckförmig (Figur 13b), achteckig (Figur 13e), fünfeckig (Figur 13f) od. dgl.. Die Baumscheiben können durch Baumscheibensegmente, wie zum Beispiel durch Trapezsegmente 43 in Figur 13e, zusammengesetzt sein. Sie können jedoch auch durch balkenförmige Elemente gebildet werden, wie in Figur 13c dargestellt (Balken 44). Die Schnitte längs Linien XII-XII in Fig. 13a und längs Linien XVII-XVII in Fig. 13d sind in den Fig. 12 und 17 dargestellt.

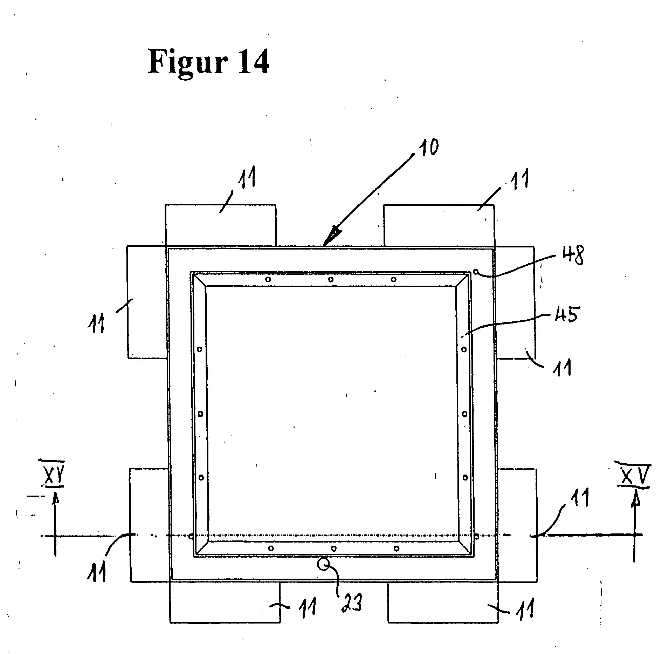

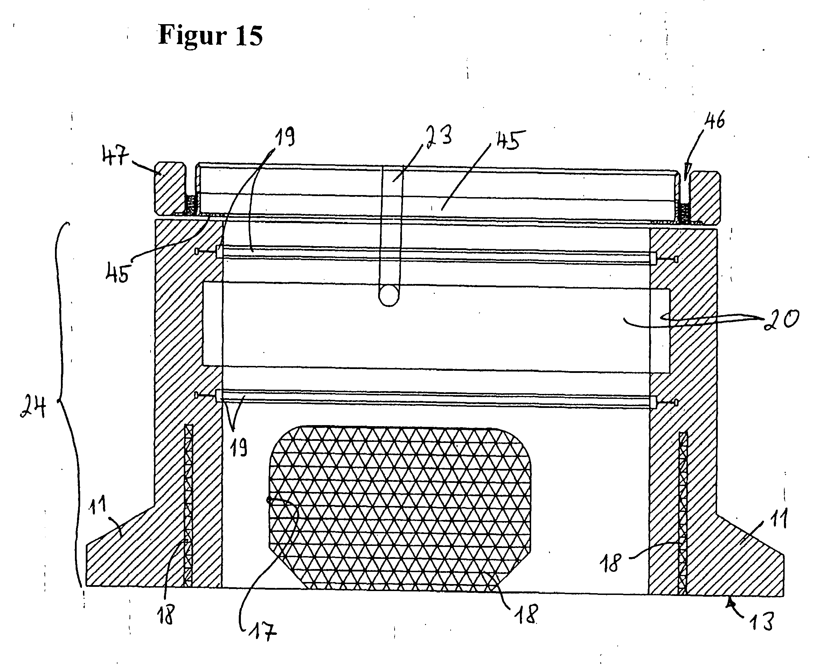

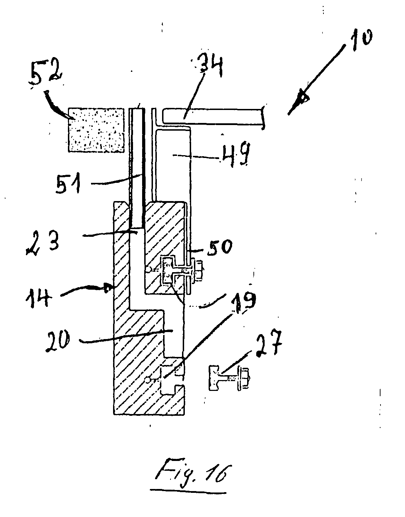

Die Figur 14 zeigt ein in Draufsicht ein quadratisches Baumquartier 10, wobei längs des oberen Randes eine Abstützung in Form einer Stahlzarge 45 angeordnet ist, die mittels Stellschrauben 46 relativ zum Pflanzkorb 24 höhenverstellbar ist. Die Stahlzarge dient zur Aufnahme einer Baumscheibe sowie auch zur Aufnahme eines äußeren Betonrandes. Damit können der Betonrand (in Figur 15 mit der Bezugsziffer 47 gekennzeichnet) sowie die Baumscheibe an die äußere Geh- und Fahrfläche angepaßt werden. Der Betonrand 47 (siehe Figur 15) ist vorzugsweise an das äußere Belagsmaterial angepaßt. Die Stahlzarge 45 ist im Querschnitt T-förmig ausgebildet, wobei der Steg sich nach oben erstreckt, während die beiden Schenkel radial nach innen bzw. radial nach außen stehen. Der sich radial nach außen erstreckende Steg trägt den erwähnten Betonrand 47. Der sich radial nach innen erstreckende Schenkel dient zur Auflage einer nicht mehr dargestellten Betonbaumscheibe. Zwischen dem aufrechten Steg und dem äußeren Betonrand 47 sind die Stellschrauben 46 von oben her zugänglich, so daß der Betonrand 47 samt Baumscheibe auf das äußere Umgebungsniveau eingestellt werden können. Die entsprechenden Öffnungen für den Zugang zu den Stellschrauben sind in Figur 14 mit der Bezugsziffer 48 gekennzeichnet. Die Figur 16 zeigt den Anschluß eines Anschlag- und Auflagewinkels 49 aus Stahl, welcher mittels T-Schienen ausgesteift sein kann und im Bereich seines Anschlusses an den Profil- bzw. Halfenschienen 19 mit einem Langloch versehen ist, so daß eine Höhenverstellung des erwähnten Winkels 49 möglich ist. Der Winkel 49 dient zum Beispiel zur Auflage einer Baumscheibe 34 aus Grauguß. Durch die mögliche Höhenverstellung des Anschlag- und Auflagewinkels 49 läßt sich die Baumscheibe an das Umgebungsniveau sehr einfach anpassen. Da durch den Anschlag- und Auflagewinkel 49 das Niveau der Baumscheibe 34 nach oben verlegt ist, ist es notwendig, den Bewässerungsschacht 23 ebenfalls nach oben hin zu verlängern, zum Beispiel durch einen entsprechenden Rohraufsatz 51.

Die das Quartier 10 begrenzende Geh- und Fahrfläche wird durch einen Pflasterstein 52 in Figur 16 angedeutet.

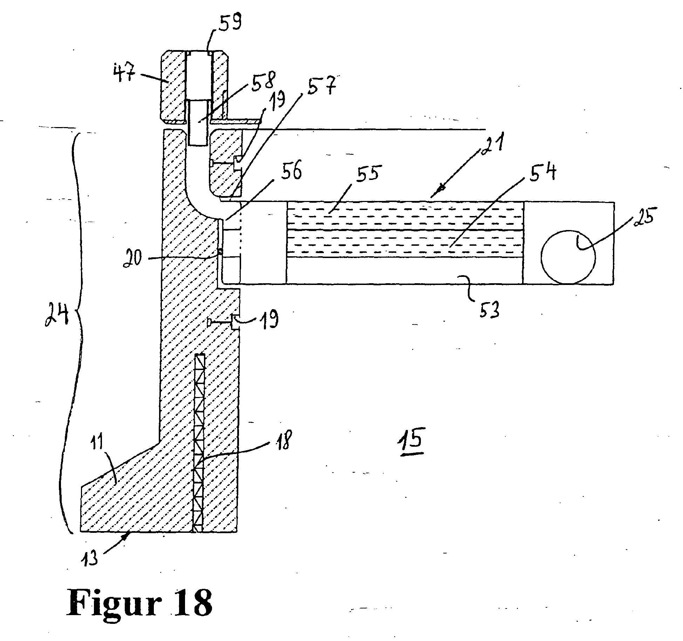

Die Figuren 17 und 18 zeigen eine spezielle Ausführungsform eines Mehrkammer-Bewässerungseinsatzes 21 innerhalb der Ausnehmung 20.

Konkret umfaßt der Bewässerungseinsatz 21 drei übereinander angeordnete Kammern 53, 54 und 55, wobei die beiden unteren Kammern mit einer Sickerleitung 25 in Fluidverbindung stehen. Im übrigen ist die unterste Kammer radial nach innen, d.h. zum Wurzelraum 15 hin geschlossen und dient somit als Wasserspeicher für eine länger dauernde dosierte Bewässerung des Wurzelwerks über die Sickerleitungen 25. Auch die mittlere Kammer 54, die etwas weniger perforiert ist als die oberste Kammer 55 hält Wasser zurück; nur bei überschüssiger Bewässerung erfolgt auch über die mittlere Kammer 54 eine unmittelbare Bewässerung des Wurzelraumes 15. Im übrigen erfolgt auch über diese Kammer 54 die Bewässerung vornehmlich durch die Sickerleitung 25 hindurch.

Die oberste Kammer 55 ist in üblicher Weise ausgebildet. Bei starker Bewässerung tritt dann überschüssiges Wasser über die oberste Kammer 55 in den Wurzelraum 15 ein. Für einen vorbestimmten Wasserzulauf in die Kammern 53, 54, 55 kann diesem noch ein spezielles Einlaufprofil 56 zugeordnet sein, welches sich im Bereich der Mündung des Bewässerungsschachtes 23 in der Seitenwand-Ausnehmung 20 befindet. Dieser Mündungsbereich ist in Figur 18 mit der Bezugsziffer 57 gekennzeichnet.

Bei der Bewässerung, insbesondere nach einer Neupflanzung, ist es besonders wichtig, daß ausreichend viel Wasser über die mittlere und obere Kammer in den Wurzelraum 15 gelangt, um dann sekundär über die Sickerleitung 25 feucht gehalten zu werden. Dies ist durch den Wasserrückstau in der untersten Kammer 53 sichergestellt.

Die Kammern 54, 55 und auch der Sickerschlauch 25 haben ferner Belüftungsfunktion nach Bewässerung des Wurzelraumes 15. Diese Belüftung ist insbesondere bei Entstehung von Gasen im Wurzelraum 15 aufgrund bakterieller Umsetzung von Dünger, Nitraten, Nitriten etc. von Bedeutung.

Über die beiden oberen Kammern 54, 55 erfolgt Bewässerung/Belüftung längs des Umfangsrandes Pflanzkorbes. Über die Sickerleitung(en) 25 erhöht man eine Bewässerung/Belüftung bis ins Innerste des Wurzelbaumes.

Auch bei dem Ausführungsbeispiel nach Figur 18 ist der Bewässerungsschacht 23 nach oben durch eine Rohrverlängerung, hier Tauchrohr 58 nach oben hin zu einem höheren Niveau der Geh- und Fahrfläche verlängert. Zu diesem Zweck ist auf den Pflanzkorb 24 nochmals ein Betonrand 47 aufgesetzt. Dieser enthält die Eintrittsöffnung zum Bewässerungsschacht 23, wobei die Eintrittsöffnung mit einer Schnellkupplung 59 für einen Schließdeckel versehen sein kann.

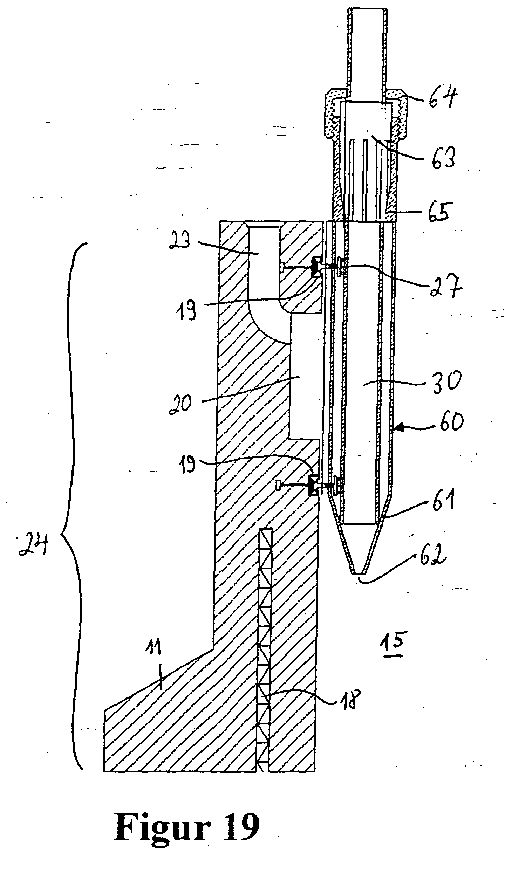

Figur 19 zeigt nochmals die Möglichkeit eines Anschlusses für eine Rohr-Befestigungseinheit 60 an den Profil- bzw. Halfenschienen 19. Die Rohrbefestigungseinheit ist in Form einer Aufnahmehülse für einen Rohrpfosten 30 ausgebildet, wobei die Hülse am unteren Ende konisch verengt ist. Der entsprechende Konus ist mit der Bezugsziffer 61 gekennzeichnet. Am unteren Ende ist der Konus 61 mit einer Öffnung 62 versehen, durch die von außen eintretendes Regenwasser aus der Rohrbefestigungshülse 60 in den Wurzelraum 15 austreten kann. Das obere Ende der Rohrbefestigungshülse umfaßt eine Klemmhülse 63, der eine Überwurfmutter 64 zugeordnet ist. Die Klemmhülse 6-3 ist im unteren Ende konisch ausgebildet sowie längs geschlitzt. Dieser Konus wirkt mit einem inneren Konus 65 der Rohrbefestigungshülse 60 zusammen. Mittels der Überwurfmutter 64 wird dann die Klemmhülse 63 nach unten in die Rohrbefestigungshülse hineingedrückt unter gleichzeitiger radialer Pressung des längs geschlitzten Abschnitts der Klemmhülse 63 nach innen zum Rohrpfosten 30 hin, so daß dieser fest innerhalb der Rohrbefestigungshülse geklemmt ist. Die Überwurfmutter 64 wirkt mit einem Außengewinde am oberen Ende der Rohrbefestigungshülse 60 zusammen.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 10: Baum-/Strauchquartier
- 11: Verbreiterung
- 12: Bodenelement
- 13: Standfläche
- 14: Seitenwandelement
- 15: Wurzelraum
- 16: Geh-/Fahrfläche
- 17: Wurzeldurchtrittsöffnung
- 18: Netzartige Abdeckung
- 19: C-Profilschiene (Halfenschiene)
- 20: Ausnehmung (Rechtecknut)
- 21: Wasserdurchlässiger Einsatz bzw. Bewässerungseinsatz
- 22: Poren
- 23: Bewässerungsschacht
- 24: Pflanzkorb
- 25: Sickerleitung
- 26: Bolzenanker
- 27: Halfenschraube
- 28: Verbindungswinkel
- 29: Halteplatte
- 30: Pfosten (Rohrpfosten)
- 31: Verkehrsschild
- 32: Auflagewinkel
- 33: Betonbaumscheibe
- 34: Baumscheibe aus Grauguß
- 35: Wurzelwerk
- 36: Spannband
- 37: Stamm
- 38: Spannseil
- 39: Ankerplatte
- 40: Ösenmutter
- 41: Baumschutzbügel
- 42: Querträger
- 43: Trapezsegment
- 44: Balken
- 45: Stahlzarge
- 46: Stellschraube
- 47: Betonrand
- 48: Stellschraubenöffnung
- 49: Anschlag- und Auflagewinkel
- 50: Langloch
- 51: Rohraufsatz
- 52: Pflasterstein
- 53: Untere Bewässerungskammer
- 54: Mittlere Bewässerungskammer
- 55: Obere Bewässerungskammer
- 56: Einlaufprofil
- 57: Mündung
- 58: Tauchrohr
- 59: Schnellkupplung
- 60: Rohrbefestigungseinheit bzw. -Hülse
- 61: Konus
- 62: Öffnung
- 63: Klemmhülse
- 64: Überwurfmutter
- 65: Innerer Konus

## Patentansprüche

1. Baum- und Strauchquartier bestehend aus einem nach Art eines Pflanzringes ausgebildeten, einen Wurzelraum (15) seitlich begrenzenden Pflanzkorb (24) aus Beton od. dgl. erdfestem Material, dessen Seitenwand (12, 14) Öffnungen (17) für den Durchtritt von Wurzeln aufweist, wobei die Wurzeldurchtrittsöffnungen (17) derart groß bemessen sind, daß auch bei ausgewachsenem Baum oder Strauch ein zwängungsfreier Durchtritt wenigstens eines Wurzelstrangs gewährleistet ist, und wobei sich über die Wurzeldurchtrittsöffnungen (17) jeweils eine netzartige Abdeckung (18) erstreckt,
**dadurch gekennzeichnet, daß**
die Seitenwand des Pflanzkorbes (24) aus mehreren, insbesondere wenigstens drei über Eck miteinander verbundenen und ggf. auch übereinander angeordneten Teilwänden bzw. Teilwandelementen (12, 14) besteht, und
**daß** an den Teilwänden oder Teilwandelementen (12, 14) innenseitig sich etwa horizontal erstreckende U- oder C-Profilschienen (19) bzw. -Schienenabschnitte eingefügt, insbesondere einbetonniert sind, und zwar so, daß die Profile der Schienen bzw. Schienenabschnitte jeweils nach innen hin offen sind.

2. Quartier nach Anspruch 1,
**dadurch gekennzeichnet, daß**
die dem Pflanzkorb (24) definierende Seitenwand (12, 14) sich im montierten Zustand innenseitig im wesentlichen vertikal erstreckt.

3. Quartier nach Anspruch 1 oder 2,
**dadurch gekennzeichnet, daß**
der Pflanzkorb (24) aus wenigstens zwei jeweils vorgefertigten übereinander angeordneten Ring- oder dgl. Elementen besteht.

4. Quartier nach einem der Ansprüche 1 bis 3,
**dadurch gekennzeichnet, daß**
der Pflanzkorb (24) eine radial nach außen und/oder innen verbreiterte Standfläche (13) aufweist.

5. Quartier nach Anspruch 1,
**dadurch gekennzeichnet, daß**
die Profilschienen (19) bzw. -Schienenabschnitte zur Fixierung von Befestigungs- oder Verbindungselementen, insbesondere Verbindungswinkel (28), Baumschutzgitter oder -Bügel (41), Pfosten (30) für Verkehrsschilder (31), Anker- bzw. Spannseilen (36, 38) zur Niederhaltung von Wurzelwerk (35), Auflagewinkel (32; 39) für Abdeckelemente (33, 34) aus Gußeisen, Beton, Holz od. dgl., und/oder zur Befestigung von sich über den Wurzelraum (15) erstreckenden Tragelementen (Querträger 42) dienen, auf denen sogenannte Wurzelbrücken (33, 34, 44) verlegbar sind.

6. Quartier nach einem der Ansprüche 1 bis 5,
**dadurch gekennzeichnet, daß**
zumindest ein Teil der Seitenwände (14) des Pflanzkorbes (24) innenseitig, insbesondere längs des oberen Innenrandes eine Ausnehmung (20) zur Aufnahme eines wasserdurchlässigen, insbesondere offenporigen Einsatzes (21) oder eines wasserdurchlässigen Formteils mit sich in den Wurzelraum (15) hineinerstreckender Sickerleitung (25) aufweist, wobei die erwähnte Ausnehmung (20) über wenigstens einen nach oben, d.h. zur Erdoberfläche bzw. Geh- und Fahrfläche (16) hin offenen Bewässerungsschacht (23) mit der vorgenannten Fläche in Verbindung steht.

7. Quartier nach Anspruch 6,
**dadurch gekennzeichnet, daß**
die Sickerleitung (25) durch einen perforierten Rohr- oder Schlauchabschnitt gebildet ist.

8. Quartier nach Anspruch 6 oder 7,
**dadurch gekennzeichnet, daß**
der wasserdurchlässige Einsatz bzw. Bewässerungseinsatz (21) als MehrkammerEinsatz (53, 54, 55) mit wenigstens zwei, insbesondere drei übereinander angeordneten Kammern ausgebildet ist, wobei die unterste Kammer (53) mit einer sich in den Wurzelraum (15) hineinerstreckenden Sickerleitung (25) verbunden ist, während die oberste Kammer (55) unmittelbar zum Wurzelraum (15) hin perforiert ist.

9. Quartier nach einem der Ansprüche 1 bis 8,
**dadurch gekennzeichnet, daß**
am oberen Rand des Pflanzkorbes (24) eine höhenverstellbare Abstützung ( 45) für eine Baumscheibe oder Wurzelbrücke und/oder einen äußeren Begrenzungsrand (47) angeordnet ist.

## Claims

1. Tree and shrub planting pit consisting of a plant basket (24) laterally limiting a root space (15) and formed in the manner of a planting ring made of concrete or similar footing material, of which the lateral wall (12, 14) provides openings (17) for the passage of roots, wherein the dimensions of the root-passage openings (17) are such that an unrestricted passage of at least one root train is guaranteed even with a fully-grown tree or shrub, and wherein a mesh-like covering (18) extends over each of the root-passage openings (17),
**characterised in that**
the lateral wall of the plant basket (24) consists of several, in particular, at least three, partial walls or partial-wall elements (12, 14) connected to one another at the corners and optionally also arranged one above the other, and that U- or C-profile rails (19) or rail portions are fitted to the inside of the partial walls or partial-wall elements (12, 14), and especially concreted in place, in fact, in such a manner that the respective profiles of the rails or rail portions are open towards the interior.

2. Planting pit according to claim 1,
**characterised in that**,
in the assembled condition, the lateral wall (12, 14) defining the interior of the plant basket (24) extends in a substantially vertical manner.

3. Planting pit according to claim 1 or 2,
**characterised in that**
the plant basket (24) consists of at least two respectively prefabricated ring elements or similar elements arranged one above the other.

4. Planting pit according to any one of claims 1 to 3,
**characterised in that**
the plant basket (24) provides a standing surface (13) widened radially outwards and/or inwards.

5. Planting pit according to claim 1
**characterised in that**
the profile rails (19) or rail portions are used for the fixing of mounting or connecting elements, in particular, mounting brackets (28), tree-protection rails or mesh (41), posts (30) for traffic signs (31), anchoring or tensioning ropes (36, 38) for holding down the roots (35), support brackets (32; 39) for covering elements (33, 34) made of cast-iron, concrete, wood or similar and/or for the attachment of bearing elements extending over the root space (15) (cross beams 42), on which so-called root-bridges (33, 34, 44) can be laid.

6. Planting pit according to any one of claims 1 to 5,
**characterised in that**
at least one part of the interior of the lateral walls (14) of the plant basket (24), especially along the upper, interior edge, provides a recess (20) for the accommodation of a water-permeable, in particular, open-pored insert (21) or a water-permeable formed part with a seepage pipe (25) extending into the root space (15), wherein the recess (20) mentioned above is connected to the surface via at least one watering channel (23) open to the top, that is to say, to the surface of the soil or respectively the pavement or road surface (16).

7. Planting pit according to claim 6,
**characterised in that**
the seepage pipe (25) is formed by a perforated tube or hose portion.

8. Planting pit according to claim 6 or 7,
**characterised in that**
the water-permeable insert or respectively watering insert (21) is designed as a multiple-chamber insert (53, 54, 55) with at least two, but especially three, chambers arranged one above the other, wherein the lowest chamber (53) is connected to a seepage pipe (25) extending into the root space (15), while the uppermost chamber (55) is perforated directly through to the root space.

9. Planting pit according to any one of claims 1 to 8,
**characterised in that**
a height-adjustable support (45) for a tree plate or root bridge and/or an external limiting edge (47) is arranged at the upper edge of the plant basket (24).

## Revendications

1. Caisson pour arbre et arbuste composé d'un panier végétal (24) en béton ou en matériau résistant similaire, conçu à la manière d'une couronne végétale, délimitant latéralement un espace radiculaire (15), dont la paroi latérale (12, 14) présente des ouvertures (17) pour le passage des racines, les ouvertures de passage des racines (17) étant conçues dans une dimension telle que même lorsque l'arbre ou l'arbuste s'est développé, un passage sans contrainte d'au moins une branche radiculaire est garanti, et un recouvrement (18) respectivement en treillis s'étendant au-delà des ouvertures de passage des racines (17),
**caractérisé en ce que**
la paroi latérale du panier végétal (24) se compose de plusieurs, en particulier d'au moins trois, parois partielles et/ou éléments de parois partielles (12, 14) reliés les uns aux autres par les coins et éventuellement également disposés les uns sur les autres, et
des rails profilés en U ou en C (19) et/ou des tronçons de rails s'étendant approximativement horizontalement du côté intérieur sont placés contre les parois partielles ou éléments de parois partielles (12, 14), en particulier sont bétonnés, et ce de telle sorte que les profilés des rails et/ou tronçons de rails sont respectivement ouverts vers l'intérieur.

2. Caisson selon la revendication 1,
**caractérisé en ce que**
la paroi latérale (12, 14) définissant le panier végétal (24) s'étend à l'état monté essentiellement verticalement du côté intérieur.

3. Caisson selon la revendication 1 ou 2,
**caractérisé en ce que**
le panier végétal (24) se compose d'au moins deux couronnes ou éléments similaires respectivement prémonté(e)s disposé(e)s les uns/unes sur les autres.

4. Caisson selon l'une quelconque des revendications 1 à 3,
**caractérisé en ce que**
le panier végétal (24) présente une surface d'appui (13) élargie radialement vers l'extérieur et/ou vers l'intérieur.

5. Caisson selon la revendication 1,
**caractérisé en ce que**
les rails profilés (19) et/ou les tronçons de rails servent à fixer des éléments de fixation ou de liaison, en particulier des connexions d'angle (28), des grilles ou des arceaux de protection des arbres (41), des poteaux (30) pour panneaux de signalisation (31), des câbles d'ancrage et/ou de serrage (36, 38) pour la retenue du système radiculaire (35), des supports angulaires (32, 39) pour des éléments de recouvrement (33, 34) en fonte, béton, bois ou similaires, et/ou à fixer des éléments de support (traverse 42), s'étendant au-dessus de l'espace radiculaire (15), sur lesquels peuvent être montés ce que l'on appelle les ponts radiculaires (33, 34, 44).

6. Caisson selon l'une quelconque des revendications 1 à 5,
**caractérisé en ce que**
au moins une partie des parois latérales (14) du panier végétal (24) présente du côté intérieur, en particulier le long du bord interne supérieur un évidement (20) destiné à recevoir un revêtement intérieur (21) perméable à l'eau, en particulier à pores ouverts ou une pièce moulée perméable à l'eau avec conduites de drainage (25) s'étendant à l'intérieur de l'espace radiculaire (15), l'évidement (20) mentionné étant relié par au moins un puits d'irrigation (23) ouvert vers le haut, c'est-à-dire vers la surface terrestre et/ou vers la surface de marche et de déplacement (16), à la surface mentionnée précédemment.

7. Caisson selon la revendication 6,
**caractérisé en ce que**
la conduite de drainage (25) est formée par un tronçon de tuyau ou de tuyau souple perforé.

8. Caisson selon la revendication 6 ou 7,
**caractérisé en ce que**
le revêtement intérieur et/ou revêtement d'irrigation (21) perméable à l'eau est conçu comme un revêtement intérieur à plusieurs chambres (53, 54, 55) avec au moins deux, en particulier trois, chambres disposées les unes sur les autres, la chambre la plus basse (53) étant reliée à une conduite de drainage (25) s'étendant à l'intérieur de l'espace radiculaire (15), tandis que la chambre la plus haute (55) est perforée directement en direction de l'espace radiculaire (15).

9. Caisson selon l'une quelconque des revendications 1 à 8,
**caractérisé en ce que**
un support réglable en hauteur (45) pour une tranche d'arbre ou des ponts radiculaires et/ou un bord de délimitation (47) externe est disposé sur le bord supérieur du panier végétal (24).
